# EUROPÄISCHE PATENTSCHRIFT

(11) **EP 3 595 934 B1**
(45) Veröffentlichungstag und Bekanntmachung des Hinweises auf die Patenterteilung: **29.11.2023**
(21) Anmeldenummer: 18711522.5
(22) Anmeldetag: 13.03.2018
(51) Int. Cl.: B60R 16/00, B60K 35/00, B60K 37/06

(54) **DREHSTELLER FÜR EIN FAHRZEUG**
CONTROL DIAL FOR A VEHICLE
ACTIONNEUR ROTATIF POUR UN VÉHICULE

(30) Priorität: 15.03.2017 DE 102017105462
(43) Veröffentlichungstag der Anmeldung: 22.01.2020
(73) Patentinhaber: KOSTAL Automobil Elektrik GmbH & Co. KG, 58513 Lüdenscheid (DE)
(72) Erfinder: SCHIRP, Christian, 44789 Bochum (DE); KARA, Cem, 44309 Dortmund (DE); MAIER, Oliver, 57439 Attendorn (DE)
(74) Vertreter: Kerkmann, Detlef
(86) Internationale Anmeldenummer: PCT/EP2018/056166
(87) Internationale Veröffentlichungsnummer: WO 2018/167016

(56) Entgegenhaltungen:
- DE-A1-102004 045 885
- DE-A1-102016 002 022
- GB-A- 2 525 036
- US-A1- 2017 269 768
- US-A1- 2017 291 639

## Beschreibung

Die Erfindung betrifft einen Drehsteller für ein Fahrzeug zum Ansteuern einer oder mehrerer Fahrzeugkomponenten umfassend eine Handhabe zum Bedienen des Drehstellers und für die Generierung eines Ansteuersignals erforderliche Komponenten, wobei der Drehsteller modular aufgebaut ist und ein Basismodul sowie ein von dem Basismodul unabhängiges, jedoch mit diesem verbindbares und auch in dieser Stellung bedienbares Bedienmodul umfasst, welches Bedienmodul einen elektrischen Energiespeicher und für die Generierung eines Ansteuersignals erforderliche Komponenten aufweist.

Manuell betätigbare Drehsteller zum Ansteuern eines oder mehrerer Aktoren werden u.a. in Kraftfahrzeugen eingesetzt. Betätigt werden durch derartige Drehsteller verschiedene Einrichtungen im Fahrzeug, wie beispielsweise eine Audioanlage, ein Navigationsgerät, die Innenbeleuchtung, nur um einige Beispiele zu nennen. Eine Auswahl der anzusteuernden Einrichtung erfolgt mittels eines solchen Drehstellers über eine an einem Display im Fahrzeug angezeigte Menüsteuerung. Durch Drück- oder Kippbewegungen des Drehstellers kann eine Navigation in unterschiedliche Menüebenen vorgenommen werden. Ein solcher Drehsteller verfügt über einen Drehknopf oder Drehknauf als Handhabe. Dieser ist entsprechend der durchzuführenden Betätigungsbewegungen gelagert, um Dreh- und Kippbewegungen und/oder auch eine Drückbetätigung zu ermöglichen. Ein solcher Drehsteller verfügt typischerweise über mehrere Signalerzeugungseinrichtungen zum Erfassen der mit der Handhabe durchgeführten Bewegung, damit entsprechend dieser die gewünschte Aktion ausgeführt werden kann.

Derartige Drehsteller befinden sich im Kraftfahrzeug typischerweise in der Mittelkonsole. Dieses ermöglicht eine Betätigung desselben nicht nur durch den Fahrer beziehungsweise vom Fahrersitz aus, sondern auch durch den Beifahrer. In einem Fahrzeug können mit einem derartigen Drehsteller eine Vielzahl von Funktionen ausgeübt und fahrzeugseitige Einrichtungen individuell eingerichtet werden, vor allem auch solche, die für den Beifahrer interessant sind und von ihm angesteuert werden wollen. Angeordnet innerhalb der Mittelkonsole ist ein solcher Drehsteller an einer für den Fahrer leicht zugänglichen Stelle. Ein bequem sitzender Beifahrer in einer von der Windschutzscheibe etwas beabstandeten Stellung kann den Drehsteller mitunter nur erreichen, wenn er sich aus seiner bequemen Sitzhaltung heraus etwas nach vorne beugt. Wenn zukünftig autonomes oder teilautonomes Fahren zur Realität wird, gilt dieses gleichermaßen auch für den Fahrer, der seinen Sitz dann ebenfalls etwas weiter, als in der Fahrerposition üblich, von der Windschutzscheibe beabstanden wird. Den Drehsteller will man dennoch erreichen, da nur über diesen zahlreiche im Fahrzeug vorhandene Einrichtungen bedient werden können.

Die Offenlegungsschrift GB 2 525 036 A zeigt einen Drehsteller gemäß dem Oberbegriff des Patentanspruchs 1. Dieser Drehsteller weist ein Basismodul und ein davon trennbares Bedienmodul auf. Das Bedienmodul ist ein grundsätzlich von dem Basismodul unabhängiges Gerät, das jedoch auch mit dem Basismodul verbindbar und, wenn mit dem Basismodul verbunden, auch bedienbar ist. Das Bedienmodul verfügt über einen elektrischen Energiespeicher, und weist die für die Generierung eines Ansteuersignals zum Ansteuern einer fahrzeugseitigen Einrichtung erforderlichen Komponenten auf. Dieser Drehsteller ist damit auch unabhängig von dem Basismodul mittels seines Bedienmoduls betätigbar. Das Bedienmodul umfasst auch eine Handhabe des Drehstellers, die als Drehknopf ausgebildet ist, der gegenüber einem Gehäuse des Bedienmoduls drehbar gelagert ist. Bei einer Drehbedienung der Handhabe muss daher immer auch eine Fixierung des Gehäuses des Bedienmoduls gegeben sein. Dies kann ganz offensichtlich dadurch der Fall sein, dass das Bedienmodul in dem Basismodul aufgenommen ist. Bei von dem Basismodul getrennten Bedienmodul muss aber das Gehäuse des Bedienmoduls beispielsweise durch den Bediener in einer Hand gehalten werden, damit mit der anderen Hand der Drehknopf gegenüber diesem verdreht werden kann.

Ausgehend von diesem diskutierten Stand der Technik liegt der Erfindung daher die Aufgabe zugrunde, einen Drehsteller für ein Kraftfahrzeug vorzuschlagen, der von quasi jeder beliebigen Position im Fahrzeug und somit auch aus einer von der üblichen Fahrerposition abweichenden Sitzposition bequem und insbesondere mit nur einer Hand bedient werden kann.

Gelöst wird diese Aufgabe erfindungsgemäß durch einen eingangs genannten, gattungsgemäßen Drehsteller, bei dem das Bedienmodul die Handhabe des Drehstellers bildet und über Sensoren zur Erfassung einer Drehbewegung des Bedienmoduls im Raum verfügt.

Dieser Drehsteller ist aus einem Basismodul und einem Bedienmodul modular aufgebaut. Das Bedienmodul stellt die Handhabe dar. Bei dem Bedienmodul handelt es sich um ein grundsätzlich von dem Basismodul unabhängiges Gerät, dass jedoch mit dem Basismodul verbindbar und, wenn mit dem Basismodul verbunden, beispielsweise auf dieses aufgelegt, auch bedienbar ist.

Das Bedienmodul verfügt zu diesem Zweck über einen elektrischen Energiespeicher, typischerweise über einen wiederaufladbaren Energiespeicher, etwa eine wiederaufladbare Batterie, und weist die für die Generierung eines Ansteuersignals zum Ansteuern einer fahrzeugseitigen Einrichtung erforderlichen Komponenten auf. Dieser Drehsteller ist damit auch unabhängig von dem Basismodul mittels seines Bedienmoduls betätigbar. Dieses bedeutet, dass das Bedienmodul, auch von dem Basismodul abgenommen, als Drehsteller verwendet werden kann. Eine Drehbewegung des Bedienmoduls führt, wenn dieses von dem Basismodul abgenommen und sich in der Hand eines Nutzers befindet, zu derselben Ansteuerung, wie ein Benutzer dieses gewohnt ist, wenn das Bedienmodul mit dem Basismodul verbunden ist. Durchaus möglich ist eine Einrichtung des Drehstellers auch, dass bei von dem Basismodul abgenommenen Bedienmodul andere Funktionalitäten und/oder fahrzeugseitige Einrichtungen angesteuert werden können oder dass nur ein begrenzter Funktionsumfang zur Verfügung gestellt wird. Mit an sich bekannten Sensoren kann eine Drehbewegung des Bedienmoduls im Raum erfasst und entsprechend dem Drehwinkelbetrag die gewünschte Ansteuerung vorgenommen werden. Wird beispielsweise eine Audioanlage angesteuert, kann durch Drehen des Drehstellers mit der Hand eines Benutzers und losgelöst vom Basismodul beispielsweise die Lautstärke eingestellt werden. Diejenigen Funktionen, die bei einem herkömmlichen Drehsteller durch Drücken (Push-Funktionalität) oder durch Kippen vorgenommen werden, können, wenn gewünscht auch, auf andere Weise bei dem Bedienmodul ausgeführt sein. So kann eine Push-Betätigung eines herkömmlichen Drehstellers als Bestätigungssignal für eine vorangegangene Eingabe etwa durch eine Fingertip-Bewegung auf das Bedienmodul (ein Antippen desselben) erfolgen. Derartige Fingertip-Bewegungen lassen sich ohne weiteres sensieren. Durchaus möglich ist auch die Ausgestaltung eines solchen Bedienmoduls derart, dass verschiedene Befehle durch ein oder mehrmaliges Fingertippen voneinander unterschieden werden können.

Aufgrund seiner Drehstellereigenschaft ist das Bedienmodul eines solchen Drehstellers typischerweise in einer Draufsicht rund oder zumindest rundlich. Die Oberseite eines solchen Drehstellers kann genutzt werden, um an dieser eine Anzeigesymbolik anzuordnen. Ebenfalls ist es möglich, die Oberseite eines solchen Bedienmoduls oder ein Teil dieser Oberseite als berührungssensitives Display und damit als Mensch-Maschine-Schnittstelle auszulegen. Dann kann eine Eingabe zum Ansteuern oder Einrichten einer fahrzeugseitigen Einrichtung auch ergänzend über ein solches Display vorgenommen werden. Um einem Nutzer das Gefühl eines Drehstellers, insbesondere bei von dem Basismodul abgenommenen Bedienmodul zu verleihen, verfügt ein solches Bedienelement vorzugsweise über eine entsprechende Drehhaptikerzeugungseinrichtung, mit der das Gefühl einer Rastung beim Drehen derselben um ihre Längsachse erzeugt wird. Das Erzeugen einer solchen Haptik ist an sich hinlänglich bekannt. Hierfür können elektromagnetische Aktuatoren eingesetzt werden.

Das Basismodul dient zur Halterung des Bedienmoduls, wenn dieses mit dem Basismodul verbunden ist, also beispielsweise auf dieses aufgelegt ist. Zu diesem Zweck verfügt das Basismodul zweckmäßiger Weise über eine Mulde, in die das Bedienmodul eingesetzt werden kann. Eine Ansteuerung der jeweiligen Einrichtung erfolgt in dieser Zusammenstellung der beiden Module in derselben Art und Weise wie dieses durch das Bedienmodule auch unabhängig von dem Basismodul vorgenommen wird. Ist das Bedienmodul an das Basismodul angeschlossen, wird der Drehsteller bedient, wie dieses von herkömmlichen Drehstellern bekannt ist.

Wenn bei abgenommenen Bedienmodul eine Menü gestützte Führung und Ansteuerung der jeweils gewünschten Einrichtung nicht gewünscht ist, verfügt das Bedienmodul über eine drahtlose Sendemöglichkeit, einen entsprechenden Ansteuerbefehl an die jeweils gewünschte Einrichtung übermitteln zu können. In einer diesbezüglichen Weiterbildung ist vorgesehen, dass zwischen dem Bedienmodul und der anzusteuernden Einrichtung eine bidirektionale Kommunikation und nicht lediglich eine unidirektionale Kommunikation möglich ist. Eine Auswahl der anzusteuernden Einrichtung kann beispielsweise über einen von dem Bedienmodul erzeugten Infrarotstrahl erfolgen, der auf diejenige Einrichtung gelenkt wird, die angesteuert werden soll. Die anzusteuernde Einrichtung hat einen Empfänger zum Empfangen und Dekodieren der empfangenen Befehle. Um komplexere Befehle übertragen zu können, ist in einer Ausgestaltung eines solchen Drehstellers dem Bedienmodul eine Nahbereichs-Funk-kommunikationsmöglichkeit zugeordnet. Eingesetzt werden kann hierfür beispielsweise der weit verbreitete Bluetooth- oder Zigbee-Standard. Zur nutzerseitigen Auswahl der anzusteuernden Einrichtung vor einer Übermittlung von Befehlsdiagrammen kann die gezielte Auswahl der Einrichtung über eine IR-Strecke erfolgen. Wenn die anzusteuernde Einrichtung ein entsprechendes Ansteuerungssignal auf der IR-Strecke von dem Bedienmodul erhält, sendet die Einrichtung ein Empfangsbestätigungssignal, dessen Empfang bei dem Bedienmodul wiederum dafür sorgt, dass von diesem der vorgesehene Befehl oder die vorgesehene Befehlsfolge an die anzusteuernde Einrichtung übersandt wird. Dieses kann auf der IR-Strecke oder auch auf einer Funkstrecke, wenn vorhanden, erfolgen. Um den Empfang des Infrarotstrahls des Bedienmoduls durch eine durch das Bedienmodul ansteuerbare Einrichtung einem Nutzer kenntlich zu machen, kann der Empfang beispielsweise des IR-Strahls durch ein visuelles Signal dem Nutzer gegenüber quittiert werden. Bei einer solchen Ausgestaltung des Bedienmoduls verfügt das Basismodul über einen IR-Empfänger, der ein solches Anforderungssignal empfängt und als Ansteuerbefehl an die entsprechende Einrichtung weiterleitet. Die Ansteuerbarkeit durch das Bedienmodul, wenn von dem Basismodul entfernt, kann auf eine Bedienfunktionalität begrenzt sein, beispielsweise bei einer Audioanlage das Einstellen der Lautstärke. Ist bei einer solchen Ausgestaltung eine andere Ansteuerung als die voreingestellte gewünscht, kann die Auswahl, wie dieses bei herkömmlichen Drehsteller auch der Fall ist, über eine an einem fahrzeugseitigen Display angezeigte Menüführung erfolgen. Dieses ist dann, wie ein Nutzer dieses gewohnt ist, durch Drehen des Bedienmodules möglich. Um eine Drehbewegung des Bedienmodules als Handhabe des Drehstellers bei an das Basismodul angeschlossene Bedienmodul zu ermöglichen, kann die Bedienmodulaufnahme des Basismoduls drehbar gelagert sein.

Die Drehwinkelerfassung selbst erfolgt typischerweise über das Bedienmodul, auch wenn eine solche basismodulseitige drehbare Bedienmodul-aufnahme selbst ebenfalls als Drehsteller ausgelegt sein kann. Je nach Auslegung eines solchen Drehstellers wird bei einer Drehwinkelbestimmung und Erkennung durch das Bedienmodul diejenige der Bedienmodul-aufnahme abgeschaltet sein oder nicht ausgewertet werden. Eingerichtet sein kann ein solcher Drehsteller auch mit bei auf das Basismodul aufgesetztem Bedienmodul, wenn die Drehwinkelerfassung des Bedienmoduls abgeschaltet oder nicht mehr ausgelesen wird und diejenige des Basismoduls genutzt wird. Dieses setzt allerdings voraus, dass das Bedienmodul, wenn an das Basismodul angeschlossen, drehmomentschlüssig mit der Bedienmodulaufnahme verbunden ist.

Die Bedienmodulaufnahme kann auch ausgelegt sein, dass diese weitere Funktionalitäten erlaubt, die als solche allein mit dem Bedienmodul nicht ausführbar sind. Hierbei kann es sich beispielsweise um die Realisierung einer Drückbetätigung handeln. Die Bedienmodulaufnahme ist zu diesem Zweck entweder translatorisch über den Stellbetrag bewegbar oder kippbar, um durch die Verstellung eine Signalerzeugungseinrichtung beispielsweise einen Tastschalter zu betätigen. Die Bedienmodulaufnahme kann alternativ oder auch ergänzend zu einer solchen Drückbetätigungsfunktionalität Kippbewegungen in bestimmte Richtungen zulassen, sodass mit dem als Handhabe dienenden Bedienmodul die Bedienmodulaufnahme des Basismoduls zum Durchführen einer bestimmten Aktion auch gekippt werden kann, beispielsweise nach vorne, nach hinten, nach links und/oder nach rechts, wenn die Bedienmodulaufnahme des Basismoduls zum Ausüben von Kippbewegen in vier Richtungen ausgehend von einer zentralen Nullstellung ausgelegt ist.

Für den Betrieb des Bedienmoduls verfügt dieses über einen elektrischen Energiespeicher. Hierbei handelt es sich typischerweise um eine wiederaufladbare Batterie. In einem solchen Fall verfügt die Bedienmodulaufnahme vorzugsweise über eine induktive Sendespule, die unterhalb eines Bodes der Bedienmodulaufnahme angeordnet ist. Im Bedienmodul ist eine komplementäre Empfängerspule angeordnet. Ist das Bedienmodul an das Basismodul angeschlossen, kann der im Bedienmodul enthaltene Energiespeicher induktiv geladen werden. Die im Basismodul aufgenommene Sendespule ist zu diesem Zweck an eine Wechselspannungsquelle angeschlossen.

Ein solcher Drehsteller kann mit einer Erkennung ausgerüstet sein, durch die basismodulseitig oder bedienmodulseitig erkannt wird, ob sich das Bedienmodul am Basismodul befindet. Verfügt der Drehsteller über eine solche Einrichtung, wird die Sendespule mit Ladestrom bestromt. Ist oder wird das Bedienmodul von dem Basismodul abgenommen, wird die Bestromung der Sendespule unterbrochen.

Die Bedienmodulaufnahme des Basismoduls ist bei einem Einsatz des Drehstellers im Fahrzeug ausgelegt, damit das Bedienmodul an dem Basismodul gehalten ist und nicht durch im normalen Fahrbetrieb auftretene Beschleunigungen, Verzögerungen oder Querkräfte das Bedienmodul von dem Basismodul wegrutscht. Dieses kann mechanisch und/oder magnetisch erfolgen. Bereits durch das Zusammenwirken von Sendespule und Empfängerspule beim induktiven Laden wird das Bedienmodul durch die entstehenden Magnetkräfte an bzw. in der Bedienmodulaufnahme des Basismoduls gehalten. In einer Weiterbildung ist vorgesehen, dass die Sendespule für das induktive Laden auch an eine Gleichstromversorgung angeschlossen ist und somit sowohl mit der für das induktive Laden notwendigen Wechselspannung oder mit Gleichspannung betrieben werden kann. Eine Wechselschaltereinrichtung, typischerweise als elektronische Wechselschaltereinrichtung ausgeführt, sorgt für eine Umschaltung, wenn erforderlich. Bei einer solchen Auslegung des Drehstellers ist eine Gleichstrombestromung der Sendespule vorgesehen, wenn das Bedienmodul mit besonders hoher Magnetkraft an dem Basismodul zu halten ist. Dieses wird nur in Ausnahmefällen der Fall sein, und zwar dann, wenn das Fahrzeug eine sehr abrupte Verzögerung erfährt. Die Wechselschalteinrichtung kann dann an einen Crash-Sensor angeschlossen sein, sodass die Umschaltung erfolgt, wenn von dem Crash-Sensor ein entsprechendes Signal abgesetzt wird. Möglich ist es auch, die Wechselschalteinrichtung anzusteuern, wenn eine Crash-bezogene Einrichtung, wie beispielsweise ein Airbag gezündet wird.

Zur Verbindung des Bedienmoduls mit dem Basismodul kann vorgesehen sein, dass das Basismodul eine erste mechanische Anschlusskontur und das Bedienmodul eine mit der ersten Anschlusskontur in Eingriff stellbare zweite Anschlusskontur aufweist, wobei die Anschlusskontur entweder des Basismoduls oder des Bedienmoduls als Eingriffskontur ausgelegt ist und diese Teil eines zwischen einer Sperrstellung und einer Nicht-Sperrstel-lung beweglichen Sperrelementes ist, und dass dem nicht das Sperrelement aufweisende Modul ein Haltemagnet und dem beweglichen Sperrelement ein durch die Magnetkraft des Haltemagneten anziehbares Komplementärelement zugehörig sind, damit bei zusammengeführten Modulen das Sperrelement des einen Moduls gegen die Kraft eines Rückstellelementes mit der Anschlusskontur des anderen Moduls in Eingriff gestellt wird.

Bei diesem Drehsteller verfügt das Basismodul über eine erste Anschlusskontur. Diese bildet eine Verriegelungskontur für das Bedienmodul. Das Bedienmodul verfügt über eine zweite Anschlusskontur, die mit der ersten Anschlusskontur des Basismoduls in Eingriff stellbar ist. Eines der beiden Module - Basismodul oder Bedienmodul - umfasst ein zwischen einer Sperrstellung und einer Nicht-Sperrstellung bewegliches Sperrelement. Durch das Sperrelement wird eine Eingriffskontur zum Verbinden der beiden Module bereitgestellt. In seiner Sperrstellung steht diese im Eingriff mit der Anschlusskontur des anderen Moduls, und zwar dann, wenn das Bedienmodul auf das Basismodul aufgesetzt ist. Ist das Bedienmodul von dem Basismodul getrennt, befindet sich das Sperrelement in seiner zurückgezogenen Nicht-Sperrstellung. In dieser Stellung kann das Sperr-element, wenn gewünscht, bündig mit der angrenzenden Oberfläche des jeweiligen Moduls angeordnet sein. Dann steht diese Eingriffskontur nicht hervor. Um die Sperrkinematik zu bewirken, ohne dass diese von einem Nutzer aktiv ausgelöst wird, verfügt das nicht das bewegliche Sperrelement aufweisende Modul über einen Haltemagneten. Das Sperrelement des anderen Moduls trägt ein durch die Magnetkraft das Haltemagneten anziehbares Komplementärelement. Hierbei kann es sich um einen zweiten Magneten handeln, der bezüglich seiner Polung gleichsinnig zu der Polung des Haltemagneten in dem Sperrelement angeordnet ist. Das Komplementärelement kann auch ein Körper mit ferromagnetischen Eigenschaften sein. Das Sperrelement ist typischerweise translatorisch bewegbar geführt, um aus seiner Sperrstellung in seine Nicht-Sperrstellung und umgekehrt bewegt werden zu können. Sind die Module nicht aneinander angeschlossen, befindet sich das Sperrelement in seiner Nicht-Sperrstellung. In dieser ist das Sperrelement durch die Kraft eines Rückstellelementes gehalten. Bei einem solchen Rückstellelement kann es sich um eine Rückstellfeder oder ein anderes aufgrund einer elastischen Deformation auf das Sperrelement eine Rückstellkraft ausübendes Element handeln. In einer anderen Ausgestaltung ist vorgesehen, dass die auf das Sperrelement wirkende Rückstellkraft durch einen Rückstellmagneten bereitgestellt wird. Auch kombinierte Rückstelleinrichtungen sind möglich. Ausgenutzt wird bei einem Rückstellmagneten, dass das Sperrelement ohnehin ein auf Magnetkraft reagierendes Komplementärelement beinhaltet. Wird zur Bereitstellung der Rückstellkraft ein Rückstellmagnet eingesetzt, ist dessen auf das Komplementärelement wirkende Magnetkraft geringer als die von dem Haltemagneten des anderen Moduls auf das Komplementärelement wirkende Magnetkraft.

Bei dem vorbeschriebenen Konzept wird die Magnetkraft des Haltemagneten nicht nur genutzt, um das Sperrelement in seine in die Anschlusskontur eingreifende Sperrstellung zu verstellen, sondern auch um die beiden Module aneinander zu befestigen. Somit wird in geschickter Weise die Magnetkraft des Haltemagneten nicht nur für die Verstellung des Sperrelementes und damit zur Herbeiführung eines Formschlusses, sondern auch zur Fixierung des Bedienmoduls am Basismodul genutzt.

Die Haltekraft, mit der die beiden Module durch die Magnetkraft aneinander befestigt sind, kann dadurch gesteigert werden, dass das Komplementärelement des Sperrelementes als Komplementärmagnet ausgelegt ist und dass auch die Rückstellkraft zum Verstellen des Sperrelementes aus seiner Sperrstellung in seiner Nicht-Sperrstellung aus einem Rückstellmagneten resultiert. Bei einer solchen Ausgestaltung sind die drei Magnete gleichsinnig zueinander angeordnet mit dem Ergebnis, dass die Magnetkraft des Haltemagneten ebenfalls auf den Rückstellmagneten und somit auf zwei in Verstellrichtung hintereinanderliegende Magnete wirkt. Entsprechend höher ist die Haltekraft und dementsprechend auch die zum Lösen des Bedienmoduls von dem Basismodul erforderliche Kraft.

Der Haltemagnet ist typischerweise ein Permanentmagnet, damit sichergesellt ist, dass das Bedienmodul dauerhaft an dem Basismodul gehalten ist.

In einem Ausführungsbeispiel eines solchen Drehsteller ist vorgesehen, dass das Basismodul als Anschlusskontur eine Anschlussmulde aufweist. Bei einer solchen Ausgestaltung ist dem Bedienmodul das bewegliche Sperrelement zugeordnet. Befindet sich das Basismodul des Bedienmoduls beispielsweise in der Mittelkonsole eines Fahrzeuges, ist das Bedienmodul, wenn mit dem Basismodul in Eingriff gestellt ist und somit das Sperrelement in die Anschlussmulde eingreift, formschlüssig in Fahrtrichtung und in Querrichtung dazu an das Basismodul angeschlossen. Dabei ist typischerweise die Eingriffskontur des Sperrelementes ausgelegt, damit sich diese an der Innenwand der Anschlussmulde des Basismoduls abstützt. Das Bedienmodul ist somit in der Querebene zur Verstellrichtung des Sperrelementes an das Basismodul unverrückbar und somit spielfrei oder quasi spielfrei angeschlossen. Durch die Kraft des Haltemagneten wird das Anschlussmodul auch bei Vorhandensein von Spiel positionsgenau gehalten. Das Eingreifen der Eingriffskontur des Sperrelementes in die Anschlussmulde des Basismoduls dient nur einer größeren Sicherheit, dass auch bei abrupten Beschleunigungen oder Verzögerungen das Anschlussmodul sicher an dem Basismodul befestigt bleibt. Die Kraft des Haltemagneten wird allein für das Halten des Anschlussmoduls am Basismodul benötigt. In Halterichtung, die typischerweise auch der Bewegungsrichtung des Sperrelementes des Bedienmoduls entspricht, entfaltet der Haltemagnet seine größte Magnetkraft. Daher braucht dieser nicht übermäßig groß ausgelegt zu werden, um die gewünschte und erforderliche Haltekraft für das Bedienmodul bereitzustellen. Genutzt wird bei diesem Konzept der magnetomechanische Eingriff des Sperrelementes in die Anschlussmulde. Bei einer Ausgestaltung, bei der das Komplementärelement ebenso wie das Rückstellelement als Permanentmagneten ausgeführt sind, ist es ausreichend, wenn es sich hierbei um Scheibenmagnete handelt. Die Magnetkraft des Haltemagneten kann durch eine Verwendung von mehr als einem Scheibenmagneten entsprechend vergrößert werden.

Nachfolgend ist die Erfindung anhand von Ausführungsbeispielen unter Bezugnahme auf die beigefügten Figuren beschrieben. Es zeigen:
- **Fig. 1:**: Eine schematisierte Querschnittsdarstellung durch einen erfindungsgemäßen Drehsteller umfassend ein Basismodul und ein Bedienmodul,
- **Fig. 2:**: der Drehsteller der Figur 1 mit von dem Basismodul abgenommenen Bedienmodul,
- **Fig. 3:**: das Bedienmodul der Figuren 1 und 2 in einer Explosionsdarstellung in perspektivischer Ansicht,
- **Fig. 4:**: eine perspektivische, zum Teil geschnittene Darstellung eines weiteren Drehstellers mit einem Basismodul und einem Bedienmodul nach Art einer Explosionsdarstellung,
- **Fig. 5:**: der Drehsteller der Figur 4 in einer teilgeschnittenen perspektivischen Darstellung (links) und in einer Teilansicht (rechts) in einer ersten Stellung und
- **Fig. 6:**: der Drehsteller der Figur 5 in einer teilgeschnittenen perspektivischen Darstellung (links) und in einer Teilansicht (rechts) in einer weiteren Stellung.

Ein Drehsteller 1 umfasst ein Basismodul 2 und ein Bedienmodul 3. Das Basismodul 2 ist bei dem dargestellten Ausführungsbeispiel in nicht näher dargestellter Art und Weise in der Mittelkonsole eines Fahrzeuges verbaut. Das Basismodul 2 umfasst eine muldenförmige Bedienmodulaufnahme 4. Diese ist unter Zwischenschaltung eines Lagers 5 drehbar gegenüber einer Halteplatte 6 gelagert. Die Halteplatte 6 ist an ihrem einen Ende an Schwenkböcken 7 schwenkbar angelenkt und stützt sich mit ihrem gegenüberliegenden Ende auf einem als Schalthütchen ausgeführten Tastschalter 8 ab. Der Tastschalter 8 ist auf einer Leiterplatte 9 angeordnet. Zwischen der Leiterplatte 9 und der Halteplatte 6 befindet sich zudem eine Druckfeder 10 als Rückstellfeder. Eine Schwenkbewegung der Halteplatte 6 um die Schwenkachse in den Schwenkböcken 7 erfolgt somit gegen die Rückstellkraft der Druckfeder 10 und die elastische Rückstellkraft des Tastschalters 8. Eine Push-Betätigung der Bedienmodulaufnahme 4, ausgeführt durch eine auf das Bedienmodul 3 erfolgte Drückbetätigung, führt zu einer Signalerzeugung in dem Tastschalter 8.

Die Bedienmodulaufnahme 4 ist von einem transparenten Kunststoffring 11 umgeben. In diesen wird mittels eines Lichtleiters 12 das von einer Lichtquelle 13 emittierte Licht eingespeist. Dadurch ist der Umfang der Bedienmodulaufnahme 4 beleuchtet.

Das Bedienmodul 3 ist in einer Draufsicht kreisrund ausgeführt und stellt die Handhabe des Drehstellers 1 dar. Das Bedienmodul 3 verfügt über ein Gehäuse 14. Die Oberseite des Gehäuses 14 ist durch ein berührungssensitives Display 15 bereitgestellt. Über das Display 15 kann eine Anzeige und auch eine Eingabe erfolgen. Zentral in dem Gehäuse 14 ist eine wiederaufladbare Batterie 16 angeordnet. Diese zentrale Anordnung der Batterie 16 ist aufgrund ihres Gewichtes zweckmäßig, da das Bedienmodul 3 auch unabhängig von dem Basismodul 2 gedreht werden soll.

Das Bedienmodul 3 umfasst des Weiteren eine Ansteuerlogik über die eine anzusteuernde fahrzeugseitige Einrichtung angesteuert werden kann (im Einzelnen nicht dargestellt). Die Ansteuerbefehle des Bedienmoduls 3 werden bei dem dargestellten Ausführungsbeispiel auf einer IR-Strecke übermittelt. Das Bedienmodul 3 verfügt zu diesem Zweck über eine IR-Sende-Empfangseinheit 17. Das Bedienmodul 3 verfügt ferner über in den Figuren nicht näher dargestellte Sensoren, um eine Drehbewegung zu erfassen. Zudem ist dem Bedienmodul 3 eine Haptikerzeugungseinrichtung zugehörig, die bei dem dargestellten Ausführungsbeispiel über eine elektromagnetisch ansteuerbare seismische Masse 18 bewirkt wird. Zum Laden der Batterie 16 verfügt das Bedienmodul 3 über eine induktive Empfängerspule 19. Das Basismodul 2 weist unterhalb seines Bodens der Bedienmodulaufnahme 4 eine komplementäre Sendespule 20 auf. Zum Laden der Batterie 16 ist die Sendespule 20 mit Wechselstrom beaufschlagt. Für die Kommunikation mit einer bedienmodulseitigen IR-Sende-Empfangseinheit ist auf der Leiterplatte 8 des Basismoduls 2 eine IR-Sende-Empfangseinheit 21 angeordnet. Die Kommunikation zwischen den beiden Sende-Empfangseinheiten 17, 21 erfolgt durch einen die Bedienmodulaufnahme 4 und die Halteplatte 6 durchgreifenden Kommunikationskanal 22.

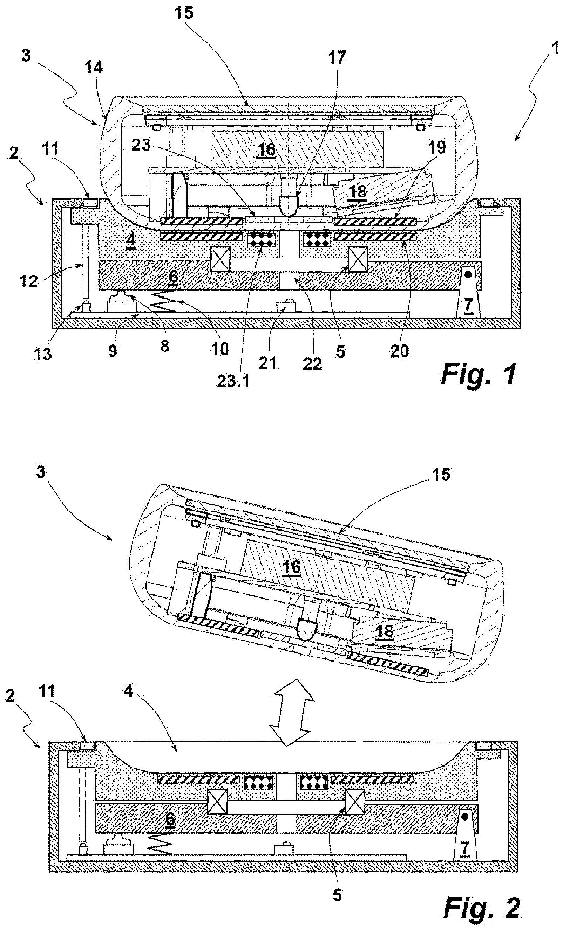

Zum Fixieren des Bedienmoduls 3 in der in Figur 1 gezeigten Stellung an dem Basismodul 2 dient ein in dem Bedienmodul 3 enthaltener Haltemagnet 23. Dieser wirkt zusammen mit der induktiven Ladespule 20, wenn bestromt. Zugleich dient der Haltemagnet 23 einer Zentrierung des Bedienmoduls 3 beim Einsetzen in die Bedienmodulaufnahme 4 des Basismoduls 2. In der Bedienmodulaufnahme 4 ist ein bezüglich seiner Magnetpole gleichsinnig zu dem Haltemagneten 23 des Bedienmoduls 3 ausgerichteter Haltemagnet 23.1 angeordnet.

In der in Figur 1 gezeigten Anordnung von Basismodul 2 und Bedienmodul 3 ist der Drehsteller 1 von einem Nutzer ebenso zu bedienen, wie ihm dieses von herkömmlichen Drehstellern im Fahrzeug bekannt ist.

Von Besonderheit bei dem Drehsteller 1 ist, dass das Bedienmodul 3 ohne Weiteres von dem Basismodul 2, wie in Figur 2 angedeutet, entfernt werden kann. Das Bedienmodul 3 ist zum Ansteuern von entsprechenden Einrichtungen im Fahrzeug voll funktionsfähig, da dieses sämtliche für eine Generierung von Ansteuersignalen notwendigen Komponenten beinhaltet. Um eine fahrzeugseitige Einrichtung anzusteuern, wird der von der IR-Sende-Empfangseinheit 17 erzeugte IR-Lichtstrahl auf die anzusteuernde Einrichtung gerichtet. Diese verfügt zu diesem Zweck über einen entsprechenden IR-Empfänger oder auch über eine IR-Sende-Empfangseinheit. Ist der Kontakt zu der ansteuernden Einheit aufgenommen, kann diese, beispielsweise durch Drehen des Bedienmoduls 3 um seine Längsachse angesteuert werden. Soll etwa die Fahrzeuginnenbeleuchtung angesteuert werden, kann durch Drehen des Bedienmoduls 3 um seine Längsachse die Helligkeit eingestellt werden. Bei einer Audioanlage kann auf diese Weise die Lautstärke hoch oder runter geregelt werden. Befindet sich die Audioanlage in ihrem Menü "Radiostationsauswahl", kann durch Drehen des Bedienmoduls 3 eine Senderauswahl manuell vorgenommen werden. Bestätigungsbefehle können durch einen Nutzer beispielsweise über das berührungssensitive Display 15 oder durch eine Fingertip-Bewegung generiert werden. Auf diese Weise kann auch mit dem von dem Basismodul 2 abgenommenen Bedienmodul eine Navigation in einem auf einem Display angezeigten Menü erfolgen.

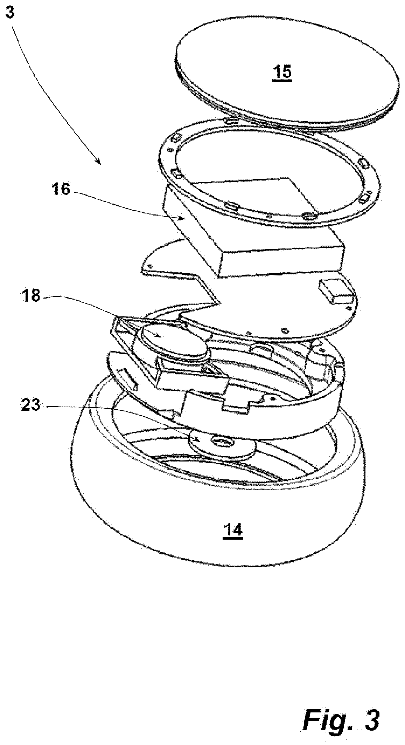

In Figur 3 sind die vorbeschriebenen Komponenten des Bedienmoduls 3 in einer Explosionsdarstellung gezeigt. Aus dieser Darstellung wird deutlich, dass der Drehsteller 1 eine kreisrunde Umfangsgeometrie aufweist.

Die Sendespule 20 des Basismoduls 2 ist ebenfalls an eine Gleichstromversorgung unter Zwischenschaltung einer Wechselschalteinrichtung angeschlossen. Sollten im Fahrzeug abrupte Verzögerungen bemerkbar werden, was bei einem Aufprall der Fall ist, wird die Wechselschalteinrichtung angesteuert und die Sendespule 20 mit Gleichstrom und zwar vorzugsweise mit der vollen Batterieleistung bestromt. Die Folge ist die Ausbildung eines sehr starken Magnetfeldes mit der Folge, dass das Bedienmodul 3 dann auch in einem solchen Fall sicher an dem Basismodul 2 befestigt bleibt.

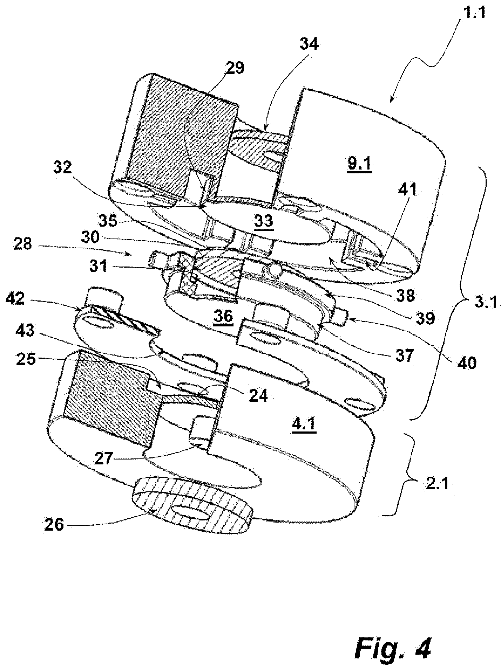

In den Figuren 4 bis 6 ist ein weiterer Drehsteller 1.1 schematisiert dargestellt, der prinzipiell gleich aufgebaut ist, wie der Drehsteller der Figuren 1 bis 3. Der Drehsteller 1.1 unterscheidet sich von dem Drehsteller der Figur 1 dadurch, dass das Basismodul 2.1 und das Bedienmodul 3.1, wenn aufeinander aufgesetzt, zusätzlich mechanisch in Eingriff gestellt sind. Gleiche Teile sind bei diesem Ausführungsbeispiel somit mit denselben Bezugszeichen, ergänzt, um ein ".1" versehen.

Das Basismodul 2.1 unterscheidet sich von dem Basismodul 2 dadurch, dass unterhalb des Bodens seiner Aufnahmemulde 25 ein als Permanentmagnet ausgelegter Haltemagnet 26 angeordnet ist. Dieser sitzt auf einem Magnethaltezapfen 27.

Das Bedienmodul 3.1 umfasst ein Gehäuse 9.1, in dem translatorisch verstellbar ein Sperrelement 28 geführt ist. Geführt ist das Sperrelement 28 an einer zylindrischen Sperrelementführung 29 des Gehäuses 9.1, die mit einer komplementären zylindrischen Innenwand 30 des Sperrelementes 28 zu dessen Führung zusammenwirkt. Die Innenwand 30 weist einen nach innen vorspringenden Absatz 31 auf. Dieser dient als Anschlag, der mit dem unteren Abschluss 32 der Sperrelementführung 29 zusammenwirkt. Die Sperrelementführung 29 ist unterseitig durch einen Boden 33 verschlossen. Dieser trägt ebenso wie der Boden 27 des Basismoduls 2.1 einen nach oben abragenden, in der Figur nicht erkennbaren Magnethaltezapfen, auf dem bei dem dargestellten Ausführungsbeispiel ein Rückstellmagnet 34 angeordnet ist.

In dem von dem Absatz 31 eingefassten Innenbereich des Sperrelementes 28 ist ein Komplementärmagnet 35 angeordnet. Dieser liegt auf dem Boden 36 des Sperrelementes 28 auf und ist wiederum durch einen in der Figur nicht erkennbaren Magnethaltezapfen gehalten. Die radial äußere Wand 37 im Bereich des Absatzes 31 stellt die Eingriffskontur des Sperrelementes 28 dar, mit der sich diese an der Innenwand der Anschlussmulde 25 des Basismoduls 2.1 abstützt, wenn das Bedienmodul 3.1 mit dem Basismodul 2.1 verbunden ist.

Das Sperrelement 28 ist innerhalb des Gehäuses 9.1 in einer ringförmigen Sperrelementaufnahme 38 gehalten. An die Wand 37 ist ein in radialer Richtung auskragender Wandabschnitt 39 angeformt. An diesem sind vier Führungszapfen 40 angeordnet, die in komplementäre Zapfenführungen 41 des Gehäuses 9.1 eingreifen. Der auskragende Wandabschnitt bildet mit seiner Unterseite einen Anschlagflansch aus. Unterseitig verschlossen ist das Gehäuse 9.1 des Bedienmoduls 3.1 durch eine ringförmige Verschlussplatte 42. Durch die Ringform der Verschlussplatte 42 ist ein Sperrelementdurchlass 43 bereitgestellt, durch den das Sperrelement 28 mit seiner umlaufenden Wand 37 hindurch passt. Mit der Oberseite der Verschlussplatte 43 wirkt die als Anschlag dienende Unterseite des Wandabschnittes 39 zum Begrenzen der Bewegung des Sperrelementes 28 zusammen.

Die drei Magnete 26, 34 und 35 sind als Ringscheibenmagnete ausgeführt und bezüglich ihrer Polung gleichsinnig zueinander angeordnet.

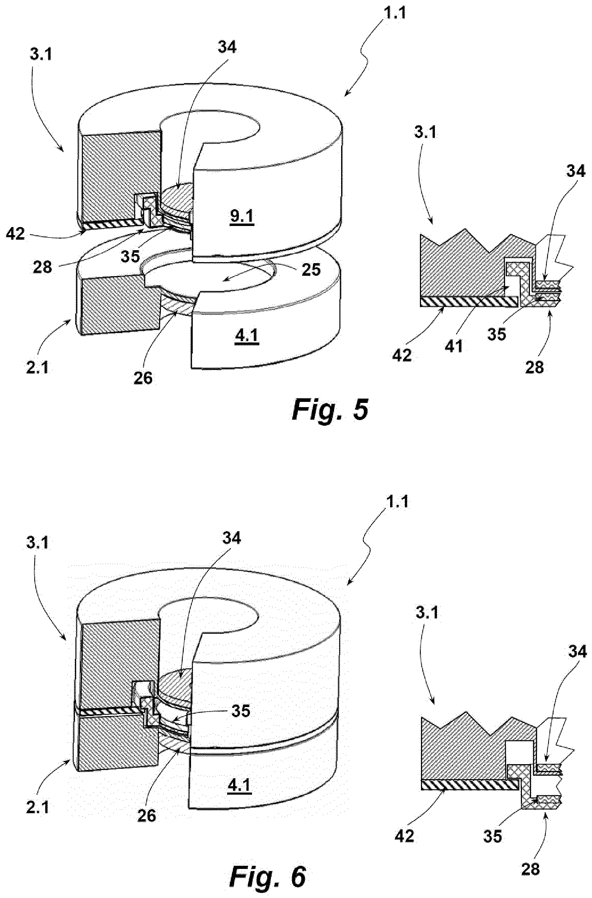

Figur 5 zeigt das Bedienmodul 1.1 mit von dem Basismodul 2.1 getrenntem Bedienmodul 3.1. Aufgrund der gleichsinnigen Polung des Rückstellmagneten 34 zu dem Komplementärmagneten 35 des Sperrelementes 28 wird der Komplementärmagnet 35 von dem Rückstellmagneten 34 angezogen, sodass sich das Sperrelement 28 in seiner Nicht-Sperrstellung befindet. In dieser Stellung ist das Sperrelement 28 in dem Gehäuse 9.1 des Bedienmoduls 3.1 aufgenommen. Der Boden 36 des Sperrelementes 28 schließt bündig mit der Unterseite der scheibenförmigen Verschlussplatte 42 ab. Diese Anordnung des Sperrelementes 28 bezüglich des Gehäuses 9.1 des Bedienmoduls 3.1 ist schematisiert in der vergrößerten Ansichtsdarstellung gezeigt. Aufgrund der zwischen dem Rückstellmagneten 34 und dem Komplementärmagneten 35 herrschenden magnetischen Anziehungskräfte ist diese Stellung des Sperrelementes 28 fixiert. Das Bedienmodul 3.1 kann, ohne dass das Sperrelement 28 störend wäre, beliebig gehandhabt werden.

Die Magnetkraft des Haltemagneten 26 ist größer als diejenige des Rückstellmagneten 34. Aus diesem Grunde wird der Komplementärmagnet 35 des Sperrelementes 28 von dem Haltemagneten 26 angezogen, sobald das Bedienmodul 3.1 auf das Basismodul 2.1 aufgesetzt ist. Diese Stellung der beiden Module 2.1, 3.1 zueinander ist in Figur 6 gezeigt. Aufgrund der höheren magnetischen Anziehungskräfte des Haltemagneten 26 wird der Komplementärmagnet 35 zu dem Haltemagneten 26 hingezogen, wodurch das Sperrelement 28 mit seiner als Eingriffskontur dienenden umlaufenden Wand 37 in die Anschlussmulde 25 eingezogen wird. In dieser in Figur 6 gezeigten Sperrstellung des Sperrelementes 28 ist das Anschlussmodul 3.1 formschlüssig in Querrichtung zur translatorischen Verstellbewegung des Sperrelementes 28 an das Basismodul 2.1 angeschlossen. Der Durchmesser der umlaufenden Wand 37 als Eingriffskontur des Sperrelementes 28 ist komplementär zu der Innenwandkontur der Anschlussmulde 25 ausgeführt. Daher ist das Bedienmodul 3.1, wenn an das Basismodul 2.1 angeschlossen, quasi spielfrei an dem Basismodul 2.1 in der Querebene zur Verstellrichtung des Sperrelementes 28 befestigt. Durch die Anziehungskraft des Haltemagneten 25, die nicht nur auf den Komplementärmagneten 35, sondern auch auf den Rückstellmagneten 34 wirkt, ist das Bedienmodul 2.1 mit entsprechender Magnetkraft an das Basismodul angeschlossen.

Zum Lösen des Bedienmoduls 3.1 von dem Basismodul 2.1 wird dieses schlichtweg ergriffen und von dem Basismodul 2.1 abgezogen. Sind die beiden Module 2.1, 3.1 voneinander getrennt, wird der Komplementärmagnet 35 des Sperrelementes 28 von dem im Gehäuse 9.1 befindlichen Rückstellmagneten 34 angezogen und in seine in dem Gehäuse 9 befindliche Nicht-Sperrstellung gebracht.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung auszuführen, ohne dass dieses im Rahmen dieser Ausführungen detailliert erläutert werden müsste.

### Bezugszeichenliste

| | | | |
|---|---|---|---|
| 1, 1.1 | Drehsteller | 31 | Absatz |
| 2, 2.1 | Basismodul | 32 | Abschluss |
| 3, 3.1 | Bedienmodul | 33 | Boden |
| 4,4.1 | Bedienmodulaufnahme | 34 | Rückstellmagnet |
| 5 | Lagerung | 35 | Komplementärmagnet |
| 6 | Halteplatte | 36 | Boden |
| 7 | Schwenkbock | 37 | Wand |
| 8 | Tastschalter | 38 | Sperrelementaufnahme |
| 9 | Leiterplatte | 39 | Wandabschnitt |
| 10 | Druckfeder | 40 | Führungszapfen |
| 11 | Kunststoffring | 41 | Zapfenführung |
| 12 | Lichtleiter | 42 | Verschlussplatte |
| 13 | Lichtquelle | 43 | Sperrelementdurchlass |
| 14 | Gehäuse | | |
| 15 | Display | | |
| 16 | Batterie | | |
| 17 | IR-Sende-Empfangseinheit | | |
| 18 | Seismische Masse | | |
| 19 | Empfangsspule | | |
| 20 | Sendespule | | |
| 21 | IR-Sende-Empfangseinheit | | |
| 22 | Kommunikationskanal | | |
| 23 | Haltemagnet | | |
| 23.1 | Haltemagnet | | |
| 24 | Boden | | |
| 25 | Aufnahmemulde | | |
| 26 | Haltemagnet | | |
| 27 | Haltemagnetzapfen | | |
| 28 | Sperrelement | | |
| 29 | Sperrelementführungen | | |
| 30 | Innenwand | | |

## Patentansprüche

1. Drehsteller für ein Fahrzeug zum Ansteuern einer oder mehrerer Fahrzeugkomponenten, umfassend eine Handhabe zum Bedienen des Drehstellers (1, 1.1) und für die Generierung eines Ansteuersignals erforderliche Komponenten, wobei der Drehsteller (1, 1.1) modular aufgebaut ist und ein Basismodul (2, 2.1) sowie ein von dem Basismodul (2, 2.1) unabhängiges, jedoch mit diesem verbindbares und auch in dieser Stellung bedienbares Bedienmodul (3, 3.1) umfasst, welches Bedienmodul (3, 3.1) einen elektrischen Energiespeicher (16) und für die Generierung eines Ansteuersignals erforderliche Komponenten aufweist, **dadurch gekennzeichnet, dass** das Bedienmodul (3, 3.1) die Handhabe des Drehstellers (1, 1.1) bildet und über Sensoren zur Erfassung einer Drehbewegung des Bedienmoduls (3, 3.1) im Raum verfügt.

2. Drehsteller nach Anspruch 1, **dadurch gekennzeichnet, dass** das Basismodul (2, 2.1) eine Bedienmodulaufnahme (4, 4.1) für das Bedienmodul (3, 3.1) aufweist.

3. Drehsteller nach Anspruch 1 oder 2, **dadurch gekennzeichnet, dass** das Basismodul (2) wenigstens eine zu der Bedienfunktionalität des Bedienmoduls (3) zusätzliche Bedienfunktionalität aufweist.

4. Drehsteller nach Anspruch 3, **dadurch gekennzeichnet, dass** eine zusätzliche Bedienfunktionalität eine Drückbetätigung der Bedienmodulaufnahme (4) zum Betätigen eines Tastschalters (8) ist und zu diesem Zweck die Bedienmodulaufnahme (4) zur Betätigung des Tastschalters (8) translatorisch verstellbar oder kippbar gelagert ist.

5. Drehsteller nach Anspruch 3 oder 4, **dadurch gekennzeichnet, dass** die Bedienmodulaufnahme (4) des Basismoduls (3) drehbar gelagert ist und das Basismodul (2) wenigstens eine durch eine Drehbewegung der Bedienmodulaufnahme (4) betätigbare Signalerzeugungseinrichtung aufweist.

6. Drehsteller nach einem der Ansprüche 3 bis 5, **dadurch gekennzeichnet, dass** die Bedienmodulaufnahme mit einer berührungssensitiven Oberfläche als Mensch-Maschine-Schnittstelle ausgerüstet ist.

7. Drehsteller nach einem der Ansprüche 1 bis 6, **dadurch gekennzeichnet, dass** das Basismodul (2) über eine zum induktiven Laden des in dem Bedienmodul (3) vorhandenen elektrischen Energiespeichers vorgesehene Sendespule (20) und das Bedienmodul (3) über eine Empfangsspule (19) verfügen.

8. Drehsteller nach Anspruch 7, **dadurch gekennzeichnet, dass** die zum induktiven Laden des Energiespeichers (16) des Bedienmoduls (3) dienende Sendespule (20) zusätzlich an eine Gleichstromquelle unter Zwischenschaltung einer Wechselschalteinrichtung angeschlossen ist.

9. Drehsteller nach Anspruch 8, **dadurch gekennzeichnet, dass** die Wechselschalteinrichtung an eine Steuereinheit angeschlossen ist, die einen Steuerbefehl zum Umschalten der Wechselschalteinrichtung auf eine Gleichstrombestromung absetzt, wenn durch einen Crash-Sensor ein Aufprall erfasst und/oder wenn fahrzeugseitig eine andere Crash-bezogene Einrichtung, wie etwa ein Airbag, angesteuert bzw. gezündet wird.

10. Drehsteller nach einem der Ansprüche 1 bis 9, **dadurch gekennzeichnet, dass** das Basismodul (2.1) eine erste mechanische Anschlusskontur und das Bedienmodul (3.1) eine mit der ersten Anschlusskontur in Eingriff stellbare zweite Anschlusskontur aufweist, wobei die Anschlusskontur entweder des Basismoduls (2.1) oder des Bedienmoduls (3.1) als Eingriffskontur (37) ausgelegt ist und diese Teil eines zwischen einer Sperrstellung und einer Nicht-Sperrstel-lung beweglichen Sperrelementes (28) ist, und dass dem nicht das Sperrelement (28) aufweisenden Modul (2.1) ein Haltemagnet (26) und dem beweglichen Sperrelement (28) ein durch die Magnetkraft des Haltemagneten (26) anziehbares Komplementärelement (35) zugehörig sind, damit bei zusammengeführten Modulen (2.1, 3.1) das Sperrelement (28) des einen Moduls (3.1) gegen die Kraft eines Rückstellelementes (34) mit der Anschlusskontur des anderen Moduls (2.1) in Eingriff gestellt wird.

11. Drehsteller nach Anspruch 10, **dadurch gekennzeichnet, dass** das Komplementärelement ein Körper mit ferromagnetischen Eigenschaften oder ein Komplementärmagnet (35) ist, dessen zu dem Haltemagnet (26) weisende Seite gegenpolig zu der zu dem Komplementärmagneten (35) weisenden Seite des Haltemagneten (26) ist.

12. Drehsteller nach Anspruch 10 oder 11, **dadurch gekennzeichnet, dass** zum Bereitstellen der Rückstellkräfte für das Sperrelement (28) ein bezüglich seiner Polung gleichsinnig zu der Polung des Haltemagneten (26) orientiert angeordneter Rückstellmagnet (34) vorgesehen ist, dessen auf das Komplementärelement (35) wirkende Magnetkraft geringer ist als die von dem Haltemagneten (26) auf das Komplementärelement (35) wirkende Magnetkraft.

13. Drehsteller nach einem der Ansprüche 10 bis 12 **dadurch gekennzeichnet, dass** der Haltemagnet (26) ein Permanentmagnet oder eine Permanentmagnetanordnung ist.

14. Drehsteller nach einem der Ansprüche 10 bis 13, **dadurch gekennzeichnet, dass** die Anschlusskontur des Basismoduls (2.1) eine Anschlussmulde (25) ist, an deren Innenwand die Eingriffskontur (37) des Sperrelementes (28) des Bedienmoduls (3.1) bei mitein-ander verbundenen Modulen (2.1, 3.1) abgestützt ist.

## Claims

1. Rotary actuator for a vehicle for controlling one or more vehicle components, comprising a handle for operating the rotary actuator (1, 1.1) and components required for generating a control signal, the rotary actuator (1, 1.1) being of modular design and comprising a base module (2, 2.1) and an operating module (3, 3.1) which is independent of the base module (2, 2.1) but can be connected thereto and can also be operated in this position, which operating module (3, 3.1) has an electrical energy store (16) and components required for generating a control signal, **characterized in that** the operating module (3, 3.1) forms the handle of the rotary actuator (1, 1.1) and has sensors for detecting a rotary movement of the operating module (3, 3.1) in space.

2. Rotary actuator according to claim 1, **characterized in that** the base module (2, 2.1) has an operating module holder (4, 4.1) for the operating module (3, 3.1).

3. Rotary actuator according to claim 1 or 2, **characterized in that** the base module (2) has at least one operating functionality in addition to the operating functionality of the operating module (3).

4. Rotary actuator according to claim 3, **characterized in that** an additional operating functionality is a push actuation of the service module receptacle (4) for actuating a push button switch (8), and for this purpose the service module receptacle (4) is mounted so as to be translationally adjustable or tiltable for actuating the push button switch (8).

5. Rotary actuator according to claim 3 or 4, **characterized in that** the operating module holder (4) of the base module (3) is rotatably mounted and the base module (2) has at least one signal generating device which can be actuated by a rotary movement of the operating module holder (4).

6. Rotary actuator according to one of claims 3 to 5, **characterized in that** the operating module holder is equipped with a touch-sensitive surface as a man-machine interface.

7. Rotary actuator according to one of the claims 1 to 6, **characterized in that** the base module (2) has a transmitting coil (20) provided for inductive charging of the electrical energy store present in the operating module (3) and the operating module (3) has a receiving coil (19).

8. Rotary actuator according to claim 7, **characterized in that** the transmitting coil (20) serving for inductively charging the energy store (16) of the operating module (3) is additionally connected to a direct-current source with the interposition of an alternating-switching device.

9. Rotary actuator according to claim 8, **characterized in that** the alternating-switching device is connected to a control unit which sends a control command to switch the alternating-switching device to a direct current flow when an impact is detected by a crash sensor and/or when another crash-related device, such as an air bag, is activated or ignited on the vehicle side.

10. Rotary actuator according to one of claims 1 to 9, **characterized in that** the base module (2.1) has a first mechanical connection contour and the operating module (3.1) has a second connection contour which can be engaged with the first connection contour, wherein the connection contour of either the base module (2.1) or the operating module (3.1) is designed as an engagement contour (37) and this is part of a locking element (28) movable between a locking position and a non-locking position, and **in that** a holding magnet (26) is associated with the module (2.1) not having the blocking element (28) and a com-plementary element (35) attractable by the magnetic force of the holding magnet (26) is associated with the movable blocking element (28), so that, when the modules (2.1, 3.1) are brought together, the locking element (28) of one module (3.1) is engaged with the connection contour of the other module (2.1) against the force of a restoring element (34).

11. Rotary actuator according to claim 10, **characterized in that** the complementary element is a body with ferromagnetic properties or a complementary magnet (35), the side of which facing the holding magnet (26) is of opposite polarity to the side of the holding magnet (26) facing the complementary magnet (35).

12. Rotary actuator according to claim 10 or 11, **characterized in that**, for providing the restoring forces for the locking element (28), a restoring magnet (34) is provided which is arranged oriented with respect to its polarity in the same direction as the polarity of the holding magnet (26) and whose magnetic force acting on the complementary element (35) is lower than the magnetic force acting on the complementary element (35) from the holding magnet (26).

13. Rotary actuator according to any one of claims 10 to 12, **characterized in that** the holding magnet (26) is a permanent magnet or a permanent magnet assembly.

14. Rotary actuator according to one of claims 10 to 13, **characterized in that** the connection contour of the base module (2.1) is a connection trough (25), on the inner wall of which the engagement contour (37) of the locking element (28) of the operating module (3.1) is supported when the modules (2.1, 3.1) are connected to one another.

## Revendications

1. Actuateur rotatif pour un véhicule destiné à commander un ou plusieurs composants du véhicule, comprenant une poignée pour la commande de l'actuateur rotatif (1, 1.1) et des composants nécessaires pour la génération d'un signal de commande, l'actuateur rotatif (1, 1.1) étant de construction modulaire et comprenant un module de base (2, 2.1) ainsi qu'un module de commande (3, 3.1) indépendant du module de base (2, 2.1), mais pouvant être relié à celui-ci et pouvant également être commandé dans cette position, lequel module de commande (3, 3.1) présente un accumulateur d'énergie électrique (16) et des composants nécessaires à la génération d'un signal de commande, **caractérisé en ce que** le module de commande (3, 3.1) forme la poignée du dispositif de réglage rotatif (1, 1.1) et dispose de capteurs pour détecter un mouvement de rotation du module de commande (3, 3.1) dans l'espace.

2. Actionneur rotatif selon la revendication 1, **caractérisé en ce que** le module de base (2, 2.1) présente un logement de module de commande (4, 4.1) pour le module de commande (3, 3.1).

3. Actionneur rotatif selon la revendication 1 ou 2, **caractérisé en ce que** le module de base (2) présente au moins une fonctionnalité de commande supplémentaire par rapport à la fonctionnalité de commande du module de commande (3).

4. Actionneur rotatif selon la revendication 3, **caractérisée en ce qu'**une fonctionnalité de commande supplémentaire est un actionnement par pression du logement du module de commande (4) pour l'actionnement d'un bouton-poussoir (8) et **en ce que**, à cet effet, le logement du module de commande (4) est monté de manière à pouvoir être déplacé en translation ou basculé pour l'actionnement du bouton-poussoir (8).

5. Actionneur rotatif selon la revendication 3 ou 4, **caractérisé en ce que** le logement du module de commande (4) du module de base (3) est logé de manière rotative et le module de base (2) présente au moins un dispositif de génération de signaux pouvant être actionné par un mouvement de rotation du logement du module de commande (4).

6. Actuateur rotatif selon l'une des revendications 3 à 5, **caractérisé en ce que** le logement du module de commande est équipé d'une surface sensible au toucher servant d'interface homme-machine.

7. Actionneur rotatif selon l'une des revendications 1 à 6, **caractérisé en ce que** le module de base (2) dispose d'une bobine d'émission (20) prévue pour la charge inductive de l'accumulateur d'énergie électrique présent dans le module de commande (3) et le module de commande (3) dispose d'une bobine de réception (19).

8. Actionneur rotatif selon la revendication 7, **caractérisée en ce que** la bobine émettrice (20) servant à charger par induction l'accumulateur d'énergie (16) du module de commande (3) est en outre raccordée à une source de courant continu avec interposition d'un dispositif de commutation alternatif.

9. Actionneur rotatif selon la revendication 8, **caractérisée en ce que** le dispositif de commutation alternatif est raccordé à une unité de commande qui émet un ordre de commande pour commuter le dispositif de commutation alternatif sur une alimentation en courant continu lorsqu'un capteur de collision détecte une collision et/ou lorsqu'un autre dispositif lié à la collision, comme par exemple un air-bag, est commandé ou allumé côté véhicule.

10. Actionneur rotatif selon l'une des revendications 1 à 9, **caractérisé en ce que** le module de base (2.1) présente un premier contour de raccordement mécanique et le module de commande (3.1) présente un deuxième contour de raccordement pouvant être mis en prise avec le premier contour de raccordement, le contour de raccordement soit du module de base (2.1) soit du module de service (3.1) étant conçu comme un contour d'engagement (37) et celui-ci faisant partie d'un élément de blocage (28) mobile entre une position de blocage et une position de non blocage, et **en ce qu'**au module (2.1) ne présentant pas l'élément de blocage (28) sont associés un aimant de maintien (26) et à l'élément de blocage mobile (28) un élément complémentaire (35) pouvant être attiré par la force magnétique de l'aimant de maintien (26), pour que, lorsque les modules (2.1, 3.1) sont réunis, l'élément de blocage (28) de l'un des modules (3.1) soit mis en prise avec le contour de raccordement de l'autre module (2.1) contre la force d'un élément de rappel (34).

11. Actuateur rotatif selon la revendication 10, **caractérisé en ce que** l'élément complémentaire est un corps présentant des propriétés ferromagnétiques ou un aimant complémentaire (35), dont le côté orienté vers l'aimant de maintien (26) est de polarité opposée au côté de l'aimant de maintien (26) orienté vers l'aimant complémentaire (35).

12. Actionneur rotatif selon la revendication 10 ou 11, **caractérisé en ce que**, pour fournir les forces de rappel à l'élément de blocage (28), il est prévu un aimant de rappel (34) dont la polarité est orientée dans le même sens que la polarité de l'aimant de retenue (26) et dont la force magnétique agissant sur l'élément complémentaire (35) est inférieure à la force magnétique agissant sur l'élément complémentaire (35) par l'aimant de retenue (26).

13. Actuateur rotatif selon l'une des revendications 10 à 12, **caractérisé en ce que** l'aimant de maintien (26) est un aimant permanent ou un ensemble d'aimants permanents.

14. Actionneur rotatif selon l'une des revendications 10 à 13, **caractérisé en ce que** le contour de raccordement du module de base (2.1) est une cuvette de raccordement (25) sur la paroi intérieure de laquelle s'appuie le contour d'engagement (37) de l'élément de blocage (28) du module de commande (3.1) lorsque les modules (2.1, 3.1) sont reliés entre eux.
